# EUROPÄISCHE PATENTSCHRIFT

(11) **EP 2 102 620 B1**
(45) Veröffentlichungstag und Bekanntmachung des Hinweises auf die Patenterteilung: **10.08.2016**
(21) Anmeldenummer: 07821387.3
(22) Anmeldetag: 16.10.2007
(51) Int. Cl.: G01L 23/10, G01L 23/22, F23Q 7/00

(54) **DRUCKMESSEINRICHTUNG**
PRESSURE-MEASURING DEVICE
DISPOSITIF DE MESURE DE PRESSION

(30) Priorität: 05.12.2006 DE 102006057627
(43) Veröffentlichungstag der Anmeldung: 23.09.2009
(73) Patentinhaber: Robert Bosch GmbH, 70442 Stuttgart (DE)
(72) Erfinder: KERN, Christoph, 71546 Aspach (DE); LANDES, Ewgenij, 71686 Remseck (DE); ZACH, Reiko, 71686 Remseck (DE); SCHUETTOFF, Michael, 75392 Deckenpfronn (DE); KLEINDL, Michael, 71701 Schwieberdingen (DE); DOERING, Christian, 70563 Stuttgart (DE); SCHOTT, Steffen, 71701 Schwieberdingen (DE); SALTIKOV, Pavlo, 71334 Waiblingen (DE)
(86) Internationale Anmeldenummer: PCT/EP2007/061021
(87) Internationale Veröffentlichungsnummer: WO 2008/068101

(56) Entgegenhaltungen:
- WO-A-2006/108939
- CH-A- 537 013
- US-A- 3 673 443

## Beschreibung

### Stand der Technik

Die Erfindung betrifft eine Druckmesseinrichtung zur Anordnung in einer Kammer einer Brennkraftmaschine. Speziell betrifft die Erfindung eine Druckmessglühkerze zur Anordnung in einer Vor-, Wirbel- oder Brennkammer einer luftverdichtenden, selbstzündenden Brennkraftmaschine.

Aus der WO 2006/072514 A1 ist eine Glühstiftkerze mit einem integrierten Drucksensor bekannt. Der Drucksensor der bekannten Glühstiftkerze ist mit einem stabförmig ausgebildeten Heizkörper verbunden, der im Inneren der Glühstiftkerze bewegbar aufgenommen ist. Dem stabförmigen Heizkörper ist eine radialsymmetrisch ausgeführte Stahlmembran zugeordnet, die ein Kraftmesselement des Brennraumdrucksensors gegen Brenngase abschirmt und eine von der Geometrie abhängige Federelastizität aufweist.

Die aus der WO 2006/072514 A1 bekannte Glühstiftkerze hat den Nachteil, dass durch die während jedes Arbeitsspiels entstehenden heißen Verbrennungsgase eine Aufheizung der Stahlmembran erreicht wird, an die sich eine Abkühlung der Stahlmembran anschließt, wodurch auf Grund thermischer Längenänderungen der Stahlmembran eine Beeinträchtigung der Druckmessung erfolgt. Speziell hat die bekannte Glühstiftkerze mit dem integrierten Drucksensor den Nachteil, dass eine Verzerrung des ausgegebenen Druck-signals auftritt.

Eine Druckmesseinrichtung zur Anordnung in einer Kammer einer Brennkraftmaschine, bei der ein Drucksensor mit einer federelastischen Membran in Wirkverbindung steht, ist aus CH 537013 A bekannt. Die Membran ist dabei radial in einer Öffnung des Gehäuses federnd befestigt und wirkt mit einer Stirnseite als Anlagefläche auf den Drucksensor. Die zweite Anlagefläche der Membran ist parallel dazu mit dem Gehäuse verbunden. Die gegenüberliegende Stirnseite der Membran, die dem Brennraum ausgesetzt ist, ist zur Reduzierung von Temperatureinflüssen mit einer Flammschutzplatte geschützt, die einen geringen Wärmeausdehnungskoeffizienten und einer geringe Wärmeleitfähigkeit aufweist.

Eine weitere Druckmesseinrichtung ist aus US 3,673,443 A bekannt, bei der zur Kompensation von thermisch bedingten Ausdehnungen der Drucksensor in Gehäuseteilen aufgenommen ist, die einen vernachlässigbaren thermischen Ausdelinungskoeffizienten aufweisen.

Aus WO 2006/108939 A2 ist eine Glühstiftkerze mit einem integrierten Drucksensor bekannt, wobei der Brennraumsdruck, der auf den Glühstift der Glühstiftkerze drückt, über eine Kraftübertragungshülse auf den Drucksensor übertragen wird.

### Offenbarung der Erfindung

Die erfindungsgemäße Druckmesseinrichtung mit den Merkmalen des Anspruchs 1 hat den Vorteil, dass die Genauigkeit der Druckmessung verbessert ist und insbesondere Verzerrungen des ausgegebenen Drucksignals verringert sind.

Durch die in den Unteransprüchen aufgeführten Maßnahmen sind vorteilhafte Weiterbildungen der im Anspruch 1 angegebenen Druckmesseinrichtung möglich.

Eine Druckeinwirkung auf das Kraftübertragungselement oder auf ein weiteres mit dem Kraftübertragungselement verbundenes Element der Druckmesseinrichtung verursacht in der Regel eine linear-elastische Einfederung der im Kraftpfad befindlichen Bauteile. Dadurch kann ein Kraftimpuls übertragen werden, der mit einem Druck im Brennraum, dem Brennraumdruck, korreliert. Eine Möglichkeit der Erfassung ist dadurch gegeben, dass ein im Kraftpfad vorgespanntes Kraftmessmodul, das den Drucksensor aufweist, die Kraftimpulse vom Kraftübertragungselement erfasst.

Die Membran, die als Metallmembran, insbesondere Stahlmembran, ausgebildet sein kann, dichtet den Innenraum des Gehäuses, in dem der Drucksensor angeordnet ist, gegenüber der kammerseitigen Öffnung ab, so dass über die kammerseitige Öffnung in das Gehäuse eindringende, heiße Brennstoffgase nicht an den Drucksensor und andere Elemente der Glühstiftkerze gelangen. Allerdings kann sich durch die

Membran eine gewisse Thermoschockempfindlichkeit ergeben. Die Membran weist auf Grund ihrer Dünnwandigkeit eine relativ geringe Masse auf, so dass durch die heißen Brennraumgase eine rasche Erwärmung der Metallmembran erreicht wird. Entsprechend schnell erfolgt auch eine Abkühlung der Membran, da diese beispielsweise mit dem Kraftübertragungsabschnitt, einem Gehäuseteil oder dergleichen mechanisch verbunden ist. Während eines Arbeitsspiels, das heißt ca. 50 mal pro Sekunde, erfolgt im normalen Betrieb jeweils eine solche Aufheizung und Abkühlung der Membran. Die dabei bedingte thermische Längenänderung kann periodische Änderungen der Vorspannung des Kraftmessmoduls bedingen. Insbesondere kann es bei der Aufheizung der Membran zu einer gewissen Entspannung des vorgespannten Kraftmessmoduls kommen, so dass eine Druckmessung vorübergehend nicht möglich ist und eine Verzerrung des Druckmesssignals auftritt.

Durch die Anordnung des Kraftübertragungsabschnittes der Membran im Kraftpfad, wobei der Kraftübertragungsabschnitt in axialer Richtung des Kraftübertragungselements und somit in Richtung der Krafteinwirkung orientiert ist, ist die thermische Beeinflussung des Druckmesssignals verringert und gegebenenfalls zumindest weitgehend aufgehoben. Speziell wirkt sich eine Längenänderung des Kraftübertragungsabschnitts der Membran nur in einer gewissen relativen Verschiebung des Kraftübertragungselements aus, die für die Druckmessung nicht wesentlich ist, und nicht in einer Entspannung oder zusätzlichen Vorspannung des Drucksensors.

Dadurch ergibt sich der Vorteil, dass die Druckmesseinrichtung für hochgenaue Einspritzsysteme geeignet ist, bei denen zur Steuerung einer homogenen Verbrennung in der Brennkammer, die sehr empfindlich gegenüber der Brennstoffmenge und dem Zeitpunkt der Einspritzung ist, aus dem Verlauf des Drucksignals auf die Fläche unter der Verbrennungskurve und somit die Verbrennungswärme geschlossen wird. Außerdem kann die Druckmesseinrichtung in vorteilhafter Weise in einem Forschungslabor zur Anwendung kommen, um bei der Erprobung neuer Motoren eine Überwachung des Brennraumdrucks über den gesamten Arbeitszyklus zu ermöglichen.

In vorteilhafter Weise umfasst die Membran einen Radialabschnitt, der im Wesentlichen senkrecht zu der axialen Richtung orientiert ist. Dadurch wird eine vorteilhafte elastische Einfederung der Membran ermöglicht.

Vorteilhaft ist es, dass die Membran einen Befestigungsabschnitt aufweist, der über den Radialabschnitt mit dem Kraftübertragungsabschnitt verbunden ist, und dass die Membran an dem Befestigungsabschnitt zumindest mittelbar mit dem Gehäuse verbunden ist. Dabei kann die Membran an dem Befestigungsabschnitt mit einem Sensorkäfig oder direkt mit dem Gehäuse verbunden sein. Die Verbindung kann beispielsweise durch Schweißen, insbesondere Laserschweißen, ausgebildet sein. Bei der Verbindung des Befestigungsabschnitts mit dem Gehäuse besteht der Vorteil, dass eine optimierte Ausgestaltung des Befestigungsabschnitts im Hinblick auf das Verbindungsverfahren möglich ist. Beispielsweise kann der Befestigungsabschnitt eine relativ große Wandstärke aufweisen, um eine zuverlässige Verbindung zu ermöglichen. Ferner kann der Befestigungsabschnitt eine gewisse Erstreckung, insbesondere in axialer Richtung, aufweisen, um eine größere Toleranz für die Positionierung der Verbindung oder der Verbindungsstellen zu ermöglichen.

In vorteilhafter Weise ist die Membran an dem Radialabschnitt zumindest mittelbar mit dem Gehäuse verbunden. Dabei kann die Membran an dem Radialabschnitt mit dem Sensorkäfig verbunden sein. Dies hat den Vorteil, dass der Anteil der temperaturbedingten Längenänderung der Membran, der eine Einwirkung auf die Druckmessung hat, weitgehend verringert oder sogar vollständig eliminiert werden kann. Für Spezialanwendungen, insbesondere für Laboranwendungen, kann dadurch die Genauigkeit der Druckmessung weiter verbessert werden. Je nach Anwendungsfall kann dies gegebenenfalls den etwas größeren Aufwand bei der Befestigung der Membran mit dem Gehäuse verglichen mit der Ausgestaltung mit Befestigungsabschnitt rechtfertigen.

In vorteilhafter Weise geht ein Ende des Radialabschnitts in ein Ende des Kraftübertragungsabschnitts über, so dass die Membran näherungsweise in Form einer Hülse ausgebildet ist, die sich im Radialabschnitt radial erweitert.

Vorteilhaft ist es auch, dass ein Ende des Radialabschnitts in ein Mittelstück des Kraftübertragungsabschnitts übergeht. Dies hat den Vorteil, dass der Anteil einer thermischen Längenänderung der Membran, der die Druckmessung beeinflusst, weitgehend verringert oder sogar ganz eliminiert werden kann, wobei eine Einstellung über die Ausgestaltung des Kraftübertragungsabschnitts möglich ist. Diese Vorteile ergeben sich insbesondere in Kombination mit einem Befestigungsabschnitt, an dem die Metallmembran mit einem Gehäuse oder dergleichen verbunden ist.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 ein erstes Ausführungsbeispiel einer erfindungsgemäßen Druckmesseinrichtung in einer schematischen, auszugsweisen Schnittdarstellung;
Fig. 2 den in Fig. 1 mit II bezeichneten Ausschnitt einer Druckmesseinrichtung entsprechend einem zweiten Ausführungsbeispiel der Erfindung und
Fig. 3 den in Fig. 1 mit III bezeichneten Ausschnitt einer Druckmesseinrichtung entsprechend einem dritten Ausführungsbeispiel der Erfindung.

### Ausführungsformen der Erfindung

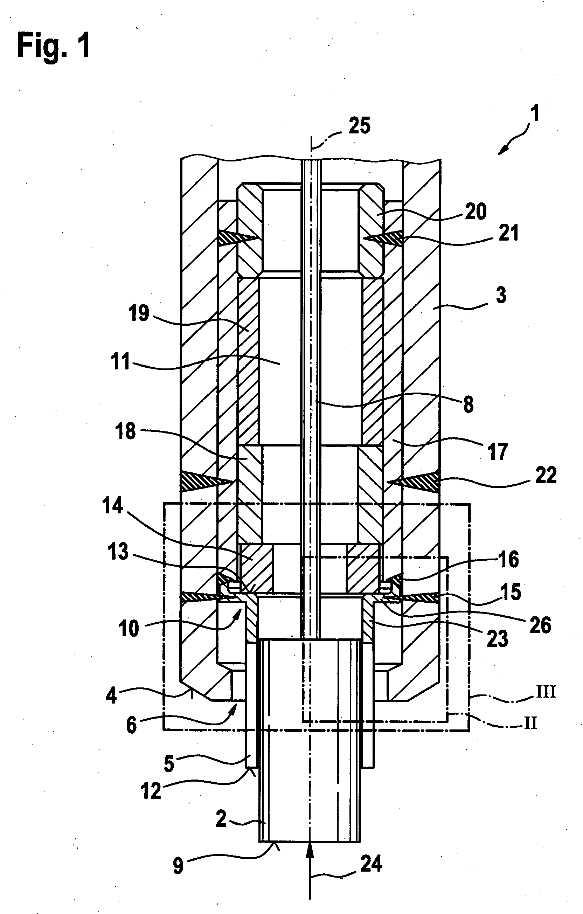

Fig. 1 zeigt ein erstes Ausführungsbeispiel einer Druckmesseinrichtung 1 in einer schematischen, axialen Schnittdarstellung. Die Druckmesseinrichtung 1 ist dabei als Druckmessglühkerze 1 für eine luftverdichtende, selbstzündende Brennkraftmaschine ausgestaltet. Ein stabförmiges Heizelement 2 der Druckmessglühkerze 1 ragt bei Vor- und Wirbelkammermotoren in die Kammer der Brennkraftmaschine und bei Motoren mit Direkteinspritzung in eine Brennkammer des Motors. Die erfindungsgemäße Druckmessglühkerze 1 eignet sich jedoch auch für andere Anwendungsfälle. Ferner kann die Druckmesseinrichtung 1 auch als Druckmesszündkerze oder als Druckmesseinspritzventil für gemischverdichtende, fremdgezündete Brennkraftmaschinen ausgestaltet sein.

Die Druckmessglühkerze 1 weist ein Gehäuse 3 mit einem Dichtkonus 4 auf. Das stabförmige Heizelement 2 ist abschnittsweise von einem Kraftübertragungselement 5 umgeben und mit diesem verbunden. Das Gehäuse 3 weist eine kammerseitige Öffnung 6 auf, an dem das von dem Kraftübertragungselement 5 umgebene Heizelement 2 aus dem Gehäuse 3 ragt. Das Kraftübertragungselement 5 ist in diesem Ausführungsbeispiel als Stützrohr für das Heizelement 2 ausgestaltet. Das Kraftübertragungselement 5 kann allerdings auch Teil des Heizelements 2 sein, zum Beispiel bei einem Heizelement 2, das ein metallisches Heizrohr mit innenliegender Heizwendel aufweist.

Das stabförmige Heizelement 2 ist mit einer Glühstromleitung 8 verbunden, die auf geeignete Weise mit einem Steuergerät oder dergleichen verbindbar ist. Ferner ist das Heizelement 2 direkt oder indirekt mit dem Gehäuse 3 elektrisch kontaktiert, so dass über das Gehäuse 3 im montierten Zustand der Druckmessglühkerze 1 eine Verbindung mit elektrischer Masse 9 herstellbar ist. Durch die Glühstromleitung 8 können relativ große Ströme, beispielsweise von mehreren Ampere fließen, um die zum Aufheizen des Heizelements 2 benötigte Energie zu dem Heizelement 2 zu führen. Die Aufheizung erfolgt dabei vorzugsweise im Bereich einer Glühspitze 9 des Heizelements 2.

Innerhalb des Gehäuses 3 ist eine Metallmembran 10 vorgesehen, die einen Innenraum 11 des Gehäuses 3 gegenüber der kammerseitigen Öffnung 6 abdichtet. Durch die Abdichtung wird verhindert, dass über die kammerseitige Öffnung 6 in das Gehäuse 3 eindringende heiße Verbrennungsgase in den Innenraum 11 gelangen. Die Metallmembran 10 weist an einem Ende eine erste Anlagefläche 12 auf, an der das Kraftübertragungselement 5 an der Metallmembran 10 anliegt. Ferner weist die Metallmembran 10 eine zweite Anlagefläche 13 auf, an der eine erste Kraftübertragungshülse 14 anliegt. Außerdem ist die Metallmembran 10 mittels einer Schweißnaht 15, die beispielsweise durch Laserschweißen ausgestaltet sein kann, mit dem Gehäuse 3 verbunden. Außerdem ist die Metallmembran 10 durch eine weitere Schweißnaht 16, die ebenfalls durch Laserschweißen ausgestaltet sein kann, mit einem Sensorkäfig 17 verbunden. Zumindest im Wesentlichen innerhalb des Sensorkäfigs 17 ist die erste Kraftübertragungshülse 14 angeordnet. Ferner ist eine zweite Kraftübertragungshülse 18, die an der ersten Kraftübertragungshülse 14 anliegt, innerhalb des Sensorkäfigs 17 angeordnet. Innerhalb des Sensorkäfigs 17 ist außerdem ein Drucksensor 19 angeordnet. Der Drucksensor 19 liegt einerseits an der zweiten Kraftübertragungshülse 18 an. Ferner stützt sich der Drucksensor 19 an einem Fixierelement 20 ab, das mittels einer Schweißnaht 21 mit dem Sensorkäfig 17 verbunden ist. Der Sensorkäfig 17 ist mittels einer weiteren Schweißnaht 22 mit dem Gehäuse 3 verbunden. Die Schweißnaht 22 kann gegebenenfalls auch entfallen.

Der Drucksensor 19 steht über die zweite Kraftübertragungshülse 18, die erste Kraftübertragungshülse 14 und einen Kraftübertragungsabschnitt 23 der Metallmembran 10 mit dem Kraftübertragungselement 5 in Wirkverbindung. Dabei sind an den Enden des Kraftübertragungsabschnitts 23 der Metallmembran 10 die beiden Anlageflächen 12, 13 ausgestaltet, die voneinander abgewandt sind. Durch einen Druck im Brennraum, das heißt in der Kammer der Brennkraftmaschine, ergibt sich in Bezug auf die Fläche der Glühspitze 9 eine Kraft 24 in Richtung einer Achse 25 des Kraftübertragungselements 5, die auf den Drucksensor 19 gerichtet ist. Der Drucksensor 19 ist innerhalb des Sensorkäfigs 17 vorzugsweise so montiert, dass eine gewisse Vorspannung des Drucksensors 19 im drucklosen Zustand, das heißt bei verschwindender Kraft 24, erreicht ist. Die Kraft 24 verstärkt diese Vorspannung, so dass aus der resultierenden Beaufschlagung des Drucksensors 19 der momentane Druck in der Kammer der Brennkraftmaschine bestimmbar ist. Durch eine Erwärmung der Metallmembran 10, die durch über die Öffnung 6 in das Gehäuse 3 eindringende heiße Verbrennungsgase hervorgerufen sein kann, erfolgt eine gewisse thermische Längenänderung des Kraftübertragungsabschnitts 23 der Metallmembran 10. Diese Längenänderung des Kraftübertragungsabschnitts 23 wirkt sich in einer gewissen Verstellung des Kraftübertragungselements 5 in axialer Richtung, das heißt entlang der Achse 25, aus. Allerdings ist die Position der zweiten Anlagefläche 13 des Kraftübertragungsabschnitts 23 der Metallmembran 10 von dieser Längenänderung nicht betroffen, so dass die Beaufschlagung des Drucksensors 19 und damit auch die Druckmessung nicht beeinflusst ist.

Die Metallmembran 10 weist außerdem einen Radialabschnitt 26 auf, der zumindest im Wesentlichen senkrecht zu der axialen Richtung, das heißt senkrecht zu der Achse 25, orientiert ist. Eine thermische Ausdehnung des Radialabschnitts 26 wirkt sich nicht auf die axiale Position der zweiten Anlagefläche 13 aus, so dass auch hierdurch kein Einfluss auf die Druckmessung mittels des Drucksensors 19 erfolgt. In dem in der Figur 1 dargestellten Ausführungsbeispiel erfolgt die Befestigung der Metallmembran 10 an dem Gehäuse 3 direkt an dem Radialabschnitt 26. Thermisch bedingte Längenänderungen der Metallmembran 10 wirken sich somit zumindest im Wesentlichen nicht auf die Druckmessung aus. Hierdurch kann eine sehr hohe Genauigkeit bei der Druckmessung, insbesondere eine verzerrungsfreie Druckmessung, mittels des Drucksensors 19 erzielt werden.

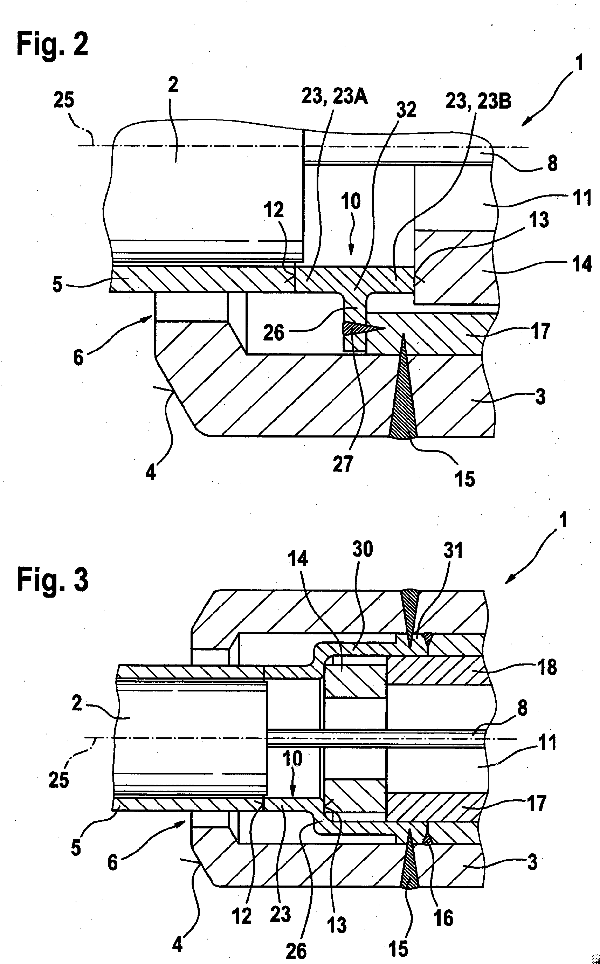

Fig. 2 zeigt den in Fig. 1 mit II bezeichneten Ausschnitt einer als Druckmessglühkerze 1 ausgestalteten Druckmesseinrichtung entsprechend einem zweiten Ausführungsbeispiel der Erfindung. In diesem Ausführungsbeispiel weist die Metallmembran 10 einen aus den Teilstücken 23A, 23B bestehenden Kraftübertragungsabschnitt 23 auf. Dabei ist die erste Anlagefläche 12 an dem ersten Teilstück 23A und die Anlagefläche 13 an dem zweiten Teilstück 23B des Kraftübertragungsabschnitts 23 ausgebildet. Dadurch ergibt sich ein im Wesentlichen T-förmiges Profil der radialsymmetrisch ausgestalteten Metallmembran 10. Die Befestigung der Metallmembran 10 an dem Sensorkäfig 17 erfolgt mittels einer Schweißnaht 27. Ferner ist der Sensorkäfig 17 mittels der Schweißnaht 15 mit dem Gehäuse 3 verbunden. Das Teilstück 23B des Kraftübertragungsabschnitts 23 liegt nicht im Wärmeleitpfad von der Metallmembran 10 auf den Sensorkäfig 17 beziehungsweise auf das Gehäuse 3. Somit kommt es im Bereich des Teilstücks 23B des Kraftübertragungsabschnitts 23 nicht zu kurzfristigen, periodischen Aufheizungen und Abkühlungen, so dass die Funktion der Druckmessung nicht beeinträchtigt ist. Durch die Befestigung der Metallmembran 10 mit dem Sensorkäfig 17 an ihrem Radialabschnitt 26 sind in Richtung der Achse 25 keine oder zumindest im Wesentlichen vernachlässigbare thermische Längenänderungen gegeben, die sich ungünstig auf die Druckmessung auswirken könnten. Somit ist eine hohe Genauigkeit der Druckmessung ermöglicht.

Fig. 3 zeigt den in Fig. 1 mit III bezeichneten Ausschnitt einer als Druckmessglühkerze 1 ausgestalteten Druckmesseinrichtung entsprechend einem dritten Ausführungsbeispiel der Erfindung. In diesem Ausführungsbeispiel weist die Metallmembran 10 einen Befestigungsabschnitt 30 auf, der über den Radialabschnitt 26 mit dem Kraftübertragungsabschnitt 23 verbunden ist. Der Befestigungsabschnitt 30 ist dabei zumindest im Wesentlichen in axialer Richtung entlang der Achse 25 geführt. Ferner addieren sich die Länge der Metallmembran 10 in axialer Richtung und die Länge des Befestigungsabschnittes 30 in axialer Richtung entlang der Achse 25 zumindest im Wesentlichen zur Gesamtlänge der Metallmembran 10 in axialer Richtung. Durch die Einwirkung der heißen Brennstoffgase oder dergleichen kommt es zu einer periodischen Erwärmung und Abkühlung der Metallmembran 10, was thermisch bedingte Längenänderungen zur Folge hat. Änderungen der Länge des Kraftübertragungsabschnitts 23 der Metallmembran 10 wirken sich dabei nicht auf die Vorspannung des Drucksensors 19 aus. Durch die thermischen Längenänderungen der Länge des Befestigungsabschnitts 30 in axialer Richtung kommt es zu einer gewissen periodischen Entlastung der Vorspannung des Drucksensors 19. Allerdings ist die gesamte, auf Grund der thermischen Längenänderung der Metallmembran 10 in axialer Richtung erfolgende periodische Entlastung des Drucksensors 19 reduziert, da nur die Länge des Befestigungsabschnitts 30 zu für die Druckmessung wesentlichen Entlastungen führt. Der Befestigungsabschnitt 30 weist einen Teil 31 mit größerer Wandstärke auf, um eine ausreichende Dicke der Metallmembran für die Schweißbadsicherung beim Laserschweißen zu gewährleisten. Über die Erstreckung des Teils 31 in axialer Richtung kann außerdem eine gewisse Toleranz zur Positionierung der Schweißnaht gewährleistet werden, um die Herstellung der Druckmessglühkerze 1, insbesondere im Rahmen einer Massenfertigung, zu erleichtern. Die Länge des Befestigungungsabschnitts 30 in axialer Richtung ist vorzugsweise möglichst kurz.

Die in den Fig. 1 bis 3 dargestellten Druckmesseinrichtungen 1 illustrieren beispielhaft mögliche Ausgestaltungen der Erfindung. Dabei kann insbesondere die Wandstärke der Metallmembran 10 an den jeweiligen Anwendungsfall angepasst werden und auch variieren. Insbesondere kann die Wandstärke der Metallmembran 10 dort relativ dünn ausgeführt werden, wo eine gewisse Flexibilität der Metallmembran 10 erwünscht ist, insbesondere im Bereich der Übergänge zwischen dem Kraftübertragungsabschnitt 23 und dem Radialabschnitt 26 sowie dem Radialabschnitt 26 und dem Befestigungsabschnitt 30. Ferner kann die Metallmembran 10 auch L-förmig ausgebildet sein. Die Herstellung der Metallmembran 10 kann beispielsweise durch Drehen eines Werkstoffs aus einem hochfesten Stahl erfolgen. Die Metallmembran kann beispielsweise eine Wandstärke von 0,3 mm aufweisen. Die erfindungsgemäße Druckmesseinrichtung 1 ermöglicht insbesondere eine Verringerung der Abgaswerte. Speziell können gewisse thermodynamische Umsatzpunkte bestimmt werden, bei denen die umgesetzte Wärmemenge 5 %, 50 % oder 95 % beträgt. Ein solcher Wert kann beispielsweise im Neuzustand bestimmt werden. Dann kann nach einer gewissen Gesamtlaufzeit eine Überprüfung durch ein Steuergerät erfolgen, wobei in Abhängigkeit von dem ermittelten Wert eine Änderung von Steuerparametern möglich ist. Zur Bestimmung des Spitzendrucks ist die Ermittlung der Gesamtkurve des Druckverlaufs über ein Arbeitsspiel erforderlich. Aus diesem Druckverlauf kann auf die umgesetzte Wärmemenge geschlossen werden. Beispielsweise kann die Gradzahl der Kurbelwelle ermittelt werden, bei der die umgesetzte Wärmemenge 50 % beträgt. In Abhängigkeit von der im Neuzustand oder einem anderen Referenzzustand bestimmten Gradzahl der Kurbelwelle kann dann eine Anpassung der Einspritzmenge und/oder der Einspritzzeit erfolgen.

Ferner kann auch eine Momentengleichstellung in Bezug auf mehrere Zylinder der Brennkraftmaschine erfolgen. Diese Gleichstellung kann über den mittleren Verbrennungsdruck gesteuert werden, wobei auf Grund der durch die Erfindung ermöglichten höheren Genauigkeit der Druckmessung auch die Genauigkeit der Gleichstellung erhöht werden kann.

Bei dem in Fig. 2 dargestellten Ausführungsbeispiel geht der Radialabschnitt 26 in ein Mittelstück 32 des Kraftübertragungsabschnitts 23 über. Die Teilstücke 23A und 23B des Kraftübertragungsabschnitts 23 können auch unterschiedlich, insbesondere in unterschiedlicher Länge, ausgestaltet sein.

Die Erfindung ist nicht auf die beschriebenen Ausführungsbeispiele beschränkt.

## Patentansprüche

1. Druckmesseinrichtung (1) zur Anordnung in einer Kammer einer Brennkraftmaschine, insbesondere Druckmessglühkerze für eine luftverdichtende, selbstzündende Brennkraftmaschine, mit einem Gehäuse (3), einem Kraftübertragungselement (5), das an einer kammerseitigen Öffnung (6), des Gehäuses (3) zumindest teilweise aus dem Gehäuse (3) ragt, einem Drucksensor (19), der in einem Innenraum (11) des Gehäuses (3) angeordnet ist, wobei der Drucksensor (19) mit dem Kraftübertragungselement (5) in Wirkverbindung steht, und einer Membran (10), die den Innenraum (11) des Gehäuses (3), in dem der Druckensor (19) angeordnet ist, gegenüber der kammerseitigen Öffnung (6) abdichtet, wobei die Membran (10) einen Kraftübertragungsabschnitt (23) aufweist, der zumindest im Wesentlichen in einer axialen Richtung des Kraftübertragungselements (5) orientiert ist, und wobei der Drucksensor (19) zumindest mittels des Kraftübertragungsabschnitts (23) der Membran (10) mit dem Kraftübertragungselement (5) in Wirkverbindung steht, **dadurch gekennzeichnet, dass** der Kraftübertragungsabschnitt (23) eine erste Anlagefläche (12), an der das Kraftübertragungselement. (5) an der Membran (10) anliegt, und eine zweite Anlagefläche (13), die der ersten Anlagefläche (12) abgewandt ist, aufweist, und dass über die zweite Anlagefläche (13) eine Kraftübertragung auf den Drucksensor (19) erfolgt.

2. Druckmesseinrichtung nach Anspruch 1, **dadurch gekennzeichnet, dass** die Membran (10) einen Radialabschnitt (26) aufweist, der zumindest im Wesentlichen senkrecht zu der axialen Richtung orientiert ist.

3. Druckmesseinrichtung nach Anspruch 2, **dadurch gekennzeichnet, dass** die Membran (10) einen Befestigungsabschnitt (30) aufweist, der über den Radialabschnitt (26) mit dem Kraftübertragungsabschnitt (23) verbunden ist, und dass die Membran (10) an dem Befestigungsabschnitt (30) zumindest mittelbar mit dem Gehäuse (3) verbunden ist.

4. Druckmesseinrichtung nach Anspruch 3, **dadurch gekennzeichnet, dass** die Membran (10) an dem Befestigungsabschnitt (30) mit einem Sensorkäfig (17) verbunden ist.

5. Druckmesseinrichtung nach Anspruch 2, **dadurch gekennzeichnet, dass** die Membran (10) an dem Radialabschnitt (26) zumindest mittelbar mit dem Gehäuse (3) verbunden ist.

6. Druckmesseinrichtung nach Anspruch 5, **dadurch gekennzeichnet, dass** die Membran (10) an dem Radialabschnitt (26) mit dem Sensorkäfig (17) verbunden ist.

7. Druckmesseinrichtung nach einem der Ansprüche 1 bis 6, **dadurch gekennzeichnet, dass** ein Ende des Radialabschnitts (26) in ein Ende des Kraftübertragungsabschnitts (23) übergeht.

8. Druckmesseinrichtung nach einem der Ansprüche 1 bis 6, **dadurch gekennzeichnet, dass** ein Ende des Radialabschnitts (26) in ein Mittelstück (32) des Kraftübertragungsabschnitts (23) übergeht.

9. Druckmesseinrichtung nach Anspruch 1, **dadurch gekennzeichnet, dass** zumindest ein Kraftübertragungselement (14) vorgesehen ist, das einerseits an der zweiten Anlagefläche (13) der Membran (10) anliegt und das andererseits mit dem Drucksensor (19) in Wirkverbindung steht.

10. Druckmesseinrichtung nach einem der Ansprüche 1 bis 10, **dadurch gekennzeichnet, dass** die Membran (10) als Metallmembran ausgebildet ist.

## Claims

1. Pressure-measuring device (1) for arrangement in a chamber of an internal combustion engine, in particular pressure-measuring glow plug for an air-compressing, self-ignition internal combustion engine, having a housing (3), a force-transmitting element (5) which projects at least partially from the housing (3) at a chamber-side opening (6) of the housing (3), a pressure sensor (19) which is arranged in an interior space (11) of the housing (3), wherein the pressure sensor (19) is operatively connected to the force-transmitting element (5), and a diaphragm (10) which seals the interior space (11) of the housing (3), in which the pressure sensor (19) is arranged, with respect to the chamber-side opening (6), wherein the diaphragm (10) has a force-transmitting section (23) which is oriented at least essentially in an axial direction of the force-transmitting element (5), and wherein the pressure sensor (19) is operatively connected to the force-transmitting element (5) at least by means of the force-transmitting section (23) of the diaphragm (10), **characterized in that** the force-transmitting section (23) has a first bearing face (12), against which the force-transmitting element (5) bears on the diaphragm (10), and a second bearing face (13) which faces away from the first bearing face (12), and **in that** force is transmitted to the pressure sensor (19) via the second bearing face (13).

2. Pressure-measuring device according to Claim 1, **characterized in that** the diaphragm (10) has a radial section (26) which is oriented at least essentially perpendicularly with respect to the axial direction.

3. Pressure-measuring device according to Claim 2, **characterized in that** the diaphragm (10) has an attachment section (30) which is connected to the force-transmitting section (23) via the radial section (26), and **in that** the diaphragm (10) is connected at least indirectly to the housing (3) at the attachment section (30).

4. Pressure-measuring device according to Claim 3, **characterized in that** the diaphragm (10) is connected to a sensor cage (17) at the attachment section (30).

5. Pressure-measuring device according to Claim 2, **characterized in that** the diaphragm (10) is connected at least indirectly to the housing (3) at the radial section (26).

6. Pressure-measuring device according to Claim 5, **characterized in that** the diaphragm (10) is connected to the sensor cage (17) at the radial section (26).

7. Pressure-measuring device according to one of Claims 1 to 6, **characterized in that** one end of the radial section (26) merges with one end of the force-transmitting section (23).

8. Pressure-measuring device according to one of Claims 1 to 6, **characterized in that** the one end of the radial section (26) merges with a centrepiece (32) of the force-transmitting section (23).

9. Pressure-measuring device according to Claim 1, **characterized in that** at least one force-transmitting element (14) is provided which at one end bears on the second bearing face (13) of the diaphragm (10) and at the other end is operatively connected to the pressure sensor (19).

10. Pressure-measuring device according to one of Claims 1 to 10, **characterized in that** the diaphragm (10) is embodied as a metal diaphragm.

## Revendications

1. Dispositif de mesure de pression (1) destiné à être disposé dans une chambre d'un moteur à combustion interne, notamment bougie de préchauffage de mesure de pression pour un moteur à combustion interne à compression d'air à auto-allumage, comprenant un boîtier (3), un élément de transmission de force (5) qui fait saillie au moins partiellement hors du boîtier (3) au niveau d'une ouverture (6) côté chambre du boîtier (3), un capteur de pression (19) qui est disposé dans un espace intérieur (11) du boîtier (3), le capteur de pression (19) se trouvant en liaison fonctionnelle avec l'élément de transmission de force (5), et une membrane (10) qui rend étanche par rapport à l'ouverture (6) côté chambre l'espace intérieur (11) du boîtier (3) dans lequel est disposé le capteur de pression (19), la membrane (10) possédant une portion de transmission de force (23) qui est orientée au moins sensiblement dans une direction axiale de l'élément de transmission de force (5), et le capteur de pression (19) se trouvant en liaison fonctionnelle avec l'élément de transmission de force (5) au moins au moyen de la portion de transmission de force (23) de la membrane (10), **caractérisé en ce que** la portion de transmission de force (23) possède une première surface d'appui (12), au niveau de laquelle l'élément de transmission de force (5) repose sur la membrane (10), et une deuxième surface d'appui (13) qui se trouve à l'opposé de la première surface d'appui (12), et **en ce qu'**une transmission de force au capteur de pression (19) est effectuée par le biais de la deuxième surface d'appui (13).

2. Dispositif de mesure de pression selon la revendication 1, **caractérisé en ce que** la membrane (10) possède une portion radiale (26) qui est orientée au moins sensiblement perpendiculairement à la direction axiale.

3. Dispositif de mesure de pression selon la revendication 2, **caractérisé en ce que** la membrane (10) possède une portion de fixation (30) qui est reliée à la portion de transmission de force (23) par le biais de la portion radiale (26), et **en ce que** la membrane (10) est reliée au moins indirectement au boîtier (3) au niveau de la portion de fixation (30).

4. Dispositif de mesure de pression selon la revendication 3, **caractérisé en ce que** la membrane (10) est reliée à une cage de capteur (17) au niveau de la portion de fixation (30).

5. Dispositif de mesure de pression selon la revendication 2, **caractérisé en ce que** la membrane (10) est reliée au moins indirectement au boîtier (3) au niveau de la portion radiale (26).

6. Dispositif de mesure de pression selon la revendication 5, **caractérisé en ce que** la membrane (10) est reliée à la cage de capteur (17) au niveau de la portion radiale (26).

7. Dispositif de mesure de pression selon l'une des revendications 1 à 6, **caractérisé en ce qu'**une extrémité de la portion radiale (26) se transforme en une extrémité de la portion de transmission de force (23).

8. Dispositif de mesure de pression selon l'une des revendications 1 à 6, **caractérisé en ce qu'**une extrémité de la portion radiale (26) se transforme en une pièce centrale (32) de la portion de transmission de force (23).

9. Dispositif de mesure de pression selon la revendication 1, **caractérisé en ce qu'**il existe un élément de transmission de force (14) qui repose d'un côté sur la deuxième surface d'appui (13) de la membrane (10) et de l'autre côté se trouve en liaison fonctionnelle avec le capteur de pression (19).

10. Dispositif de mesure de pression selon l'une des revendications 1 à 10, **caractérisé en ce que** la membrane (10) est réalisée sous la forme d'une membrane métallique.
